# EUROPÄISCHE PATENTSCHRIFT

(11) **EP 1 397 601 B1**
(45) Veröffentlichungstag und Bekanntmachung des Hinweises auf die Patenterteilung: **25.01.2006**
(21) Anmeldenummer: 02732711.3
(22) Anmeldetag: 14.05.2002
(51) Int. Cl.: F16B 13/14, F16B 13/02

(54) **VERBUNDANKER**
SHEAR CONNECTOR
TIGE D'ANCRAGE

(30) Priorität: 19.06.2001 DE 10129441
(43) Veröffentlichungstag der Anmeldung: 17.03.2004
(73) Patentinhaber: fischerwerke Artur Fischer GmbH & Co. KG, 72178 Waldachtal (DE)
(72) Erfinder: GRÜN, Jürgen, 79268 Bötzingen (DE); JAKOB, Rainer, 79111 Freiburg (DE); STEURER, Paul, 79331 Teningen (DE); WOHLGETHAN, Rainer, 79639 Grenzach-Wyhlen (DE)
(86) Internationale Anmeldenummer: PCT/EP2002/005275
(87) Internationale Veröffentlichungsnummer: WO 2002/103212

(56) Entgegenhaltungen:
- DE-A- 3 831 683
- GB-A- 2 323 648
- US-A- 4 475 856
- US-A- 4 983 083

## Beschreibung

Die Erfindung betrifft einen Verbundanker insbesondere für eine Verankerung in der Zugzone gemäß dem Oberbegriff des Anspruches 1.

Anspruch 1 geht von der US-A-4 983 083 (FROEHLICH PETER ET AL) 8. Januar 1991 (1991-01-08) aus. Der Gattung nach betrifft das Patentbegehren daher einen Verbundanker insbesondere für eine Verankerung in der Zugzone, der aus einer mittels einer Verbundmasse in einem Bohrloch eines Bauteils verankerbaren Ankerstange besteht, die mehrere sich in Richtung auf das Einsteckende erweiternde und durch zylindrische Abschnitte voneinander beabstandete Konusabschnitte aufweist, wobei die Länge der zylindrischen Abschnitte das 0,5-fache bis 2,0-fache der Länge des sich an den jeweiligen Abschnitt in Richtung Einsteckende anschließenden Konusabschnittes beträgt.

Ein anderer Verbundanker mit einer Ankerstange, die mehrere sich in Richtung auf das Einsteckende erweiternde Konusabschnitte aufweist und mittels einer Verbundmasse in einem Bohrloch eines Bauteils verankerbar ist, ist aus der EP 0 867 624 B1 bekannt. Die Eignung der bekannten Ankerstange für Verankerungen in der Zugzone bei Verzicht auf eine Beschichtung der Konusabschnitte und einer Drahthülse zum Schutz der Beschichtung wurde dadurch erreicht, dass die Menge der Zuschlagstoffe wie Quarzsand in der Verbundmasse verringert und die sich daraus ergebende Reduzierung der Verbundfestigkeit nach dem Aushärten der Verbundmasse dadurch wieder kompensiert wurde, dass das Verhältnis der Bohrloch-Ringspaltfläche zum Bolzenquerschnitt auf einen Wert zwischen 0,3 und 0,5 verringert wurde.

Die Eignung eines Verbundankers in der Zugzone hängt ferner davon ab, dass eine axiale Verschiebung der Ankerstange in der ausgehärteten Mörtelschale und damit ein Nachspreizen ermöglicht wird. Bei dieser Verschiebung rutschen die Konusabschnitte in den engeren Bereich der Mörtelschale nach, so dass erneut eine formschlüssige Verspannung zwischen Ankerstange und Mörtelschale eintritt. Zur Verschiebung der Ankerstange gegenüber der Mörtelschale ist es erforderlich, dass sich die Mantelfläche der Ankerstange vollständig von der Mörtelschale ablöst, während der Verbund zwischen der Mörtelschale und der Bohrlochwandung erhalten bleibt. Bei der bekannten Ankerstange liegt der Wert des Verhältnisses der Verbundfläche zur Konusfläche zwischen 3 und 4,5, der eine Ablösung der Mantelfläche der Ankerstange von der Mörtelschale sicherstellt.

Die Erzielung hoher Haltewerte in der Zugzone mit dem bekannten Verbundanker setzt eine Mindestanzahl von Konusabschnitten voraus, die keinen oder nur einen kurzen durch zylindrische Abschnitte gebildeten Abstand zwischen den einzelnen Konusabschnitten zulässt. Mit der Anzahl der Konusabschnitte steigt allerdings auch bei einer an der Ankerstange angreifenden Zuglast die auf die Mörtelschale einwirkende Spreizkraft, wodurch sich eine Erhöhung der Rand- und Achsabstände ergibt.

Ausgehend von diesem Stand der Technik liegt der Erfindung die Aufgabe zugrunde, einen für die Zugzone geeigneten Verbundanker der eingangs genannten Art derart zu verbessern, dass einerseits hohe Auszugswerte erreicht werden und andererseits durch Verringerung der durch die Konusabschnitte ausgehenden Spreizdruckkräfte eine Reduzierung der Rand- und Achsabstände ermöglicht wird.

Die Lösung dieser Aufgabe wird durch die im Anspruch 1 angegebenen Merkmale erreicht. Die Länge der zwischen den Konusabschnitten angeordneten zylindrischen Abschnitte entspricht dem 0,5-fachen bis 2,0-fachen der Länge des sich an den jeweiligen zylindrischen Abschnitt in Richtung Einsteckende anschließenden Konusabschnittes. Damit entsteht nach dem Aushärten der Verbundmasse eine längere Mörtelschale mit einer dickeren Wandung im Bereich des zylindrischen Abschnittes. Bei einer an der Ankerstange angreifenden Zugbelastung ist dieser zylindrische Abschnitt der Mörtelschale in der Lage, höhere Kräfte gegen Durchzug des Konusabschnittes aufzunehmen. Die erhöhte Durchzugskraft ermöglicht es, die Anzahl der Konusabschnitte bezogen auf eine gleiche Verankerungslänge gegenüber der bekannten Ankerstange zu reduzieren. So benötigt beispielsweise die bekannte Ankerstange fünf Konusabschnitte um eine annähernd gleiche Auszugskraft wie bei der erfindungsgemäßen Ankerstange mit beispielsweise drei Konusabschnitten zu erreichen.

Eine größere Anzahl der Konusabschnitte bedingt zwangsläufig auch eine höhere, auf die ausgehärtete Mörtelschale einwirkende Spreizkraft bei einer an der Ankerstange angreifenden Zugbelastung. Durch die geringere Anzahl der Konusabschnitte wird somit bei der erfindungsgemäßen Ankerstange die Spreizkraft reduziert, was geringere Abstände zum Rand eines Betonteiles oder zum nächsten Befestigungspunkt (Achsabstand) zulässt.

Gemäß der Erfindung nimmt der Durchmesser der zwischen den Konusabschnitten angeordneten zylindrischen Abschnitte vom Einsteckende ausgehend zu und deren Länge ab, wobei der Durchmesser der zylindrischen Abschnitte gegenüber dem Außendurchmesser der Ankerstange vorzugsweise um das 0,5-fache bis 0,75-fache reduziert sein kann. Damit weist der dem am Einsteckende angeordneten Konusabschnitt zugeordnete zylindrische Abschnitt den geringsten Durchmesser auf, so dass die um diesen zylindrischen Abschnitt ausgebildete Mörtelschale die größte Wandungsdicke besitzt und damit dem Durchziehen des Konusabschnittes durch die Mörtelschale den größten Widerstand entgegen setzt. Der vom Einsteckende am weitesten entfemt liegende zylindrische Abschnitt mit dem größten Durchmesser bestimmt mit seinem Querschnitt die Stahltragfähigkeit der Ankerstange. Durch diese vorteilhafte Weiterbildung ergibt sich eine weitere Verbesserung des Auszugswerts des erfindungsgemäßen Verbundankers.

Die am Übergang eines Konusabschnittes zu einem zylindrischen Abschnitt ausgebildete Stirnfläche ist vorzugsweise als Kegelfläche mit einem Winkel zur Mittelachse zwischen 45° und 85° ausgebildet. Mit dieser Gestaltung wird einerseits eine Kerbwirkung an der Ankerstange vermieden und andererseits das Ablösen der Mantelfläche der Ankerstange von der Mörtelschale bei einer Bohrlocherweiterung durch Rissbildung erleichtert.

Dem gleichen Zweck dient auch die weitere Ausgestaltung der Erfindung, dass sich an dem vom Einsteckende am weitesten abliegenden Konusabschnitt ein konischer Bereich anschließt, der sich in Richtung zum hinteren Ende der Ankerstange in einem flachen Winkel vorzugsweise zwischen 1,5° bis 4° erweitert. Dadurch reicht bereits eine geringfügige axiale Verschiebung der Ankerstange gegenüber der Mörtelschale, um ein Abreißen des Haftverbundes zur Ankerstange zu erreichen. Zum anderen wird durch diesen konischen Bereich beim Eintreiben der Ankerstange in das Bohrloch die noch groben Körner des Zuschlagstoffes allmählich zerkleinert, und somit verhindert, dass grobe Körner bzw. Segmente des Zuschlagstoffes in den engeren Ringspalt gepresst werden. Diese Ausgestaltung ist vor allem dann von wesentlichem Vorteil, wenn der Verbundanker in Verbindung mit einer Glaspatrone verwendet wird.

Ebenfalls zweckmäßig für die Verwendung in Verbindung mit einer Glaspatrone ist die weitere Gestaltung, dass die Ankerstange an ihrem Einsteckende eine Mischspitze aufweist, die durch eine zur Mittelachse geneigte Schrägfläche gebildet ist. Mit dieser Mischspitze wird einerseits die Glaspatrone zerstört und andererseits die beiden Komponenten des Harzsystems miteinander vermischt.

Schließlich kann die Ankerstange an ihren das Größtmaß aufweisenden Mantelflächen des Verankerungsbereichs mit einem Mehrkantprofil, vorzugsweise einem Sechskantprofil, versehen sein. Durch die Eckkanten des Mehrkantprofils wird die Mörtelschale in Längsrichtung eingekerbt, so dass die an den Eckkanten vorhandene Querschnittsschwächung der Mörtelschale das Aufreißen und damit das Nachspreizen erleichtert.

Nachfolgend werden Ausführungsbeispiele der Erfindung anhand der Zeichnung näher erläutert. Es zeigen:
- Figur 1: eine Ankerstange gemäß der Erfindung in einer Seitenansicht;
- Figur 2: die in einem Bohrloch eines Bauteils eingemörtelte Ankerstange gemäß Figur 1;
- Figur 3: eine weitere Ausführungsform der Ankerstange in Seitenansicht; und
- Figur 4: den in Figur 3 angegebenen Schnitt A-A.

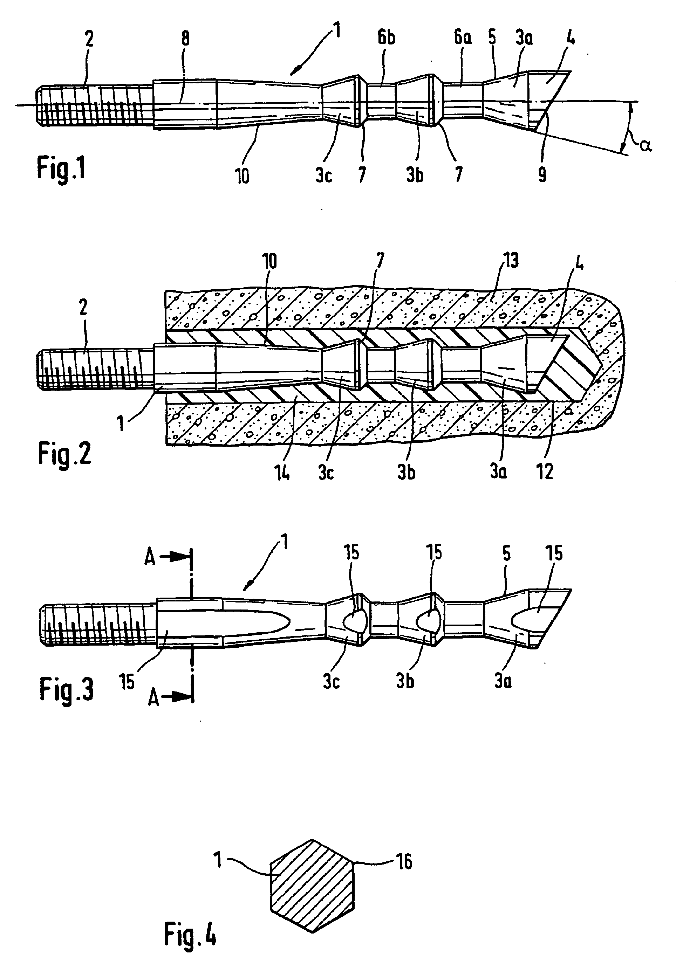

Der in Figur 1 und 2 dargestellte Verbundanker besteht aus einer Ankerstange 1, der an seinem hinteren Ende ein Außengewinde 2 zur Befestigung eines Gegenstandes aufweist. Der Verankerungsbereich wird durch mehrere, im Ausführungsbeispiel durch drei Konusabschnitte 3a, 3b und 3c gebildet, die jeweils eine sich zum Einsteckende 4 hin erweiternde Konusfläche 5 aufweisen. Zwischen den einzelnen Konusabschnitten 3a, 3b, 3c sind zylindrische Abschnitte 6a, 6b angeordnet, die jeweils mit dem kleinsten Durchmesser der Konusabschnitte sich in Richtung des Außengewindes 2 der Ankerstange 1 erstrecken.

Die zylindrischen Abschnitte 6a, 6b weisen eine Länge auf, die dem 0,5- bis 2,0-fachen der Länge des sich an den jeweiligen Abschnitt in Richtung Einsteckende 4 anschließenden Konusabschnittes entsprechen kann. Ferner nimmt der Durchmesser der zylindrischen Abschnitte 6a, 6b vom Einsteckende 4 ausgehend in Richtung Außengewinde 2 der Ankerstange 1 zu, während deren Länge abnimmt. Der zylindrische Abschnitt 6a weist demzufolge einen kleineren Durchmesser und eine größere Länge auf als der zylindrische Abschnitt 6b. Da der größte Durchmesser der Konusabschnitte jeweils gleich ist, ergibt sich damit zwangsläufig auch eine größere Länge der Konusfläche 5 des Konusabschnittes 3a gegenüber den jeweils vor ihm liegenden Konusabschhitten 3b und 3c. Der Konuswinkel α liegt vorzugsweise zwischen 12° und 20°.

Die am Übergang der Konusabschnitte 3b, 3c zum jeweiligen zylindrischen Abschnitt 6a, 6b ausgebildete Stirnfläche 7 ist als Kegelfläche mit einem Winkel zur Mittelachse 8 zwischen 45° und 85° ausgebildet. Am Einsteckende 4 ist die Ankerstange 1 mit einer Mischspitze versehen, die durch eine zur Mittelachse 8 geneigte Schrägfläche 9 gebildet ist.

An dem Konusabschnitt 3c schließt sich ein konischer Bereich 10 an, der sich in Richtung zum Außengewinde 2 hin in einem flachen Winkel vorzugsweise zwischen 1,5° bis 4° erweitert.

In Figur 2 ist die Verankerung der Ankerstange 1 in einem Bohrloch 12 eines Bauteils 13 mittels der zu einer Mörtelschale 14 ausgehärteten Verbundmasse dargestellt. Die Verbundmasse kann in Form einer Glaspatrone oder einer Kartusche mit Statikmischer in das Bohrloch 12 eingebracht werden. In beiden Fällen wird in der Regel eine Verbundmasse verwendet, wobei die Harzkomponente auf ungesättigten Polyesterharzen und/oder Vinylurethanharzen und/oder Expoxidharzen und/oder Polyurethanharzen und/oder Vinylesterharzen und/oder mineralischen Bindemitteln basiert. Als Härterkomponente wird ein Dibenzolperoxid verwendet, das im Gips phlegmatisiert ist.

Nach dem Einbringen der Verbundmasse in das Bohrloch 12 wird die Ankerstange 1 mit einem Bohrhammer maschinell oder mit Hammerschlägen in das Bohrloch eingetrieben. Wird die Verbundmasse mittels einer Patrone eingebracht, wird diese beim Eintreiben der Ankerstange 1 zerstört und gleichzeitig die Komponenten der Verbundmasse vermischt. Nach dem Aushärten der Verbundmasse bildet diese eine harte Mörtelschale 14 mit einer der Mantelfläche der Ankerstange 1 entsprechenden Innenkontur.

Tritt nach der Befestigung eines Gegenstandes durch Rissbildung im Bauteil 13 eine Bohrlocherweiterung ein, erfolgt aufgrund der höheren Verbundspannung zwischen Bohrlochwandung und Mörtelschale 14 gegenüber der Verbundspannung zwischen der Mantelfläche der Ankerstange 1 und der Mörtelschale zumindest in Teilbereichen der Mantelfläche der Ankerstange 1 eine Ablösung, die unter dem Einfluss der an der Ankerstange 1 angreifenden Zugbelastung zu einer geringfügigen axialen Verschiebung der Ankerstange 1 gegenüber der Mörtelschale 14 führt. Die Verschiebung erfolgt solange, bis die Konusflächen 5 der Konusabschnitte 3a, 3b und 3c wieder gegen die beim Aushärten geformten Innenkonusflächen der Mörtelschale anliegen und dabei infolge des erneuten Formschlusses und des sich bildenden Spreizdruckes den maximalen Haltewert ermöglichen. Während die Konusflächen 5 der Konusabschnitte 3a, 3b und 3c durch die axiale Verschiebung erneut verspannt werden, werden durch die gegenläufigen Konusflächen der Stirnfläche 7 am Übergang eines Konusabschnittes zu einem zylindrischen Abschnitt und des konischen Bereichs 10 im Anschluss an den Konusabschnitt 3c Freiräume geschaffen, die den Nachspreizeffekt erleichtern.

Durch die unterschiedlichen Durchmesser der zylindrischen Abschnitte 6a, 6b weist der dem Einsteckende 4 am nächsten liegende Abschnitt der Mörtelschale die dickste Wandungsstärke und größte Länge auf. Dadurch ergibt sich für den Konusabschnitt 3a mit der größten Verankerungstiefe die höchste Durchzugskraft.

Das in Figur 3 und 4 dargestellte Ausführungsbeispiel der Ankerstange 1 ist an seinen das Größtmaß aufweisenden Mantelflächen mit einem Mehrkantprofil 15 - vorzugsweise einem Sechskantprofil - versehen. Dadurch entstehen an den Eckkanten 16 nach dem Aushärten der Mörtelschale 14 in Längsrichtung verlaufende Querschnittsschwächungen, die ein Aufreißen der Mörtelschale bei einer axialen Verschiebung der Ankerstange 1 gegenüber der Mörtelschale insbesondere im Bereich der Konusabschnitte 3a, 3b und 3c erleichtern. Durch das Aufreißen entstehen einzelne Segmente im Bereich der Konusflächen 5 der Konusabschnitte 3a , 3b und 3c, die den Aufbau eines Spreizdrucks und damit den Nachspreizeffekt begünstigen.

## Patentansprüche

1. Verbundanker insbesondere für eine Verankerung in der Zugzone, der aus einer mittels einer Verbundmasse in einem Bohrloch eines Bauteils verankerbaren Ankerstange (1) besteht, die mehrere sich in Richtung auf das Einsteckende (4) erweiternde und durch zylindrische Abschnitte (6a, 6b) voneinander beabstandete Konusabschnitte (3a, 3b, 3c) aufweist, wobei die Länge der zylindrischen Abschnitte (6a, 6b) das 0,5-fache bis 2,0-fache der Länge des sich an den jeweiligen Abschnitt in Richtung Einsteckende (4) anschließenden Konusabschnittes (3a, 3b) beträgt, **dadurch gekennzeichnet, dass** der Durchmesser der zwischen den Konusabschnitten (3a, 3b, 3c) angeordneten zylindrischen Abschnitte (6a, 6b) vom Einsteckende (4) ausgehend zunimmt und deren Länge abnimmt.

2. Verbundanker nach Anspruch 1, **dadurch gekennzeichnet, dass** der Durchmesser der zylindrischen Abschnitte (6a, 6b) gegenüber dem Außendurchmesser der Ankerstange (1) um das 0,5-fache bis 0,75-fache reduziert ist.

3. Verbundanker nach Anspruch 1, **dadurch gekennzeichnet, dass** die Ankerstange (1) mit wenigstens zwei vorzugsweise drei Konusabschnitten (3a, 3b, 3c) versehen ist, deren Konuswinkel (α) zwischen 12° und 20° beträgt.

4. Verbundanker nach Anspruch 1, **dadurch gekennzeichnet, dass** die am Übergang eines Konusabschnittes (3a, 3b, 3c) zu einem zylindrischen Abschnitt (6a, 6b) ausgebildete Stirnfläche (7) als Kegelfläche mit einem Winkel zur Mittelachse (8) zwischen 45° und 85° ausgebildet ist.

5. Verbundanker nach Anspruch 1, **dadurch gekennzeichnet, dass** die Ankerstange (1) an ihrem Einsteckende (4) eine Mischspitze aufweist, die durch eine zur Mittelachse (8) geneigte Schrägfläche (9) gebildet ist.

6. Verbundanker nach Anspruch 1, **dadurch gekennzeichnet, dass** sich an dem vom Einsteckende (4) am weitesten abliegenden Konusabschnitt (3c) ein konischer Bereich (10) anschließt, der sich in Richtung zum hinteren Ende der Ankerstange (1) hin in einem flachen Winkel vorzugsweise zwischen 1,5° bis 4° erweitert.

7. Verbundanker nach Anspruch 1, **dadurch gekennzeichnet, dass** die Ankerstange (1) an ihren das Größtmaß aufweisenden Mantelflächen mit einem Mehrkantprofil (15) versehen ist.

## Claims

1. Composite anchor, especially for anchoring in zones subject to tensile forces, which consists of an anchor rod (1) anchorable by means of a compound mass in a hole drilled in a building component, the anchor rod comprising several cone-like segments (3a, 3b, 3c) widening towards the insertion end (4) and spaced from one another by cylindrical portions (6a, 6b), the length of the cylindrical portions (6a, 6b) being 0.5 times to 2.0 times the length of the cone-like segment (3a, 3b) adjoining the respective portion in the direction of the insertion end (4), **characterised in that** the diameter of the cylindrical portions (6a, 6b) arranged between the cone-like segments (3a, 3b, 3c) increases, starting from the insertion end (4), and their length decreases.

2. Composite anchor according to claim 1, **characterised in that** compared with the outer diameter of the anchor rod (1) the diameter of the cylindrical portions (6a, 6b) is reduced by 0.5 times to 0.75 times.

3. Composite anchor according to claim 1, **characterised in that** the anchor rod (1) is provided with at least two, preferably three, cone-like segments (3a, 3b, 3c), the angle of taper (α) of which is between 12° and 20°.

4. Composite anchor according to claim 1, **characterised in that** the front face (7) formed at the transition of a cone-like segment (3a, 3b, 3c) to a cylindrical portion (6a, 6b) is in the form of a conical surface having an angle to the centre line (8) of between 45° and 85°.

5. Composite anchor according to claim 1, **characterised in that** the anchor rod (1) has at its insertion end (4) a mixing tip formed by an oblique face (9) inclined to the centre line (8).

6. Composite anchor according to claim 1, **characterised in that** a conical region (10) adjoins the cone-like segment (3c) located furthest away from the insertion end (4), this conical region widening towards the rear end of the anchor rod (1) at a shallow angle of preferably between 1.5° and 4°.

7. Composite anchor according to claim 1, **characterised in that** the anchor rod (1) is provided on its outer surfaces of maximum dimension with a polygonal profile (15).

## Revendications

1. Elément d'ancrage composite, notamment pour un ancrage dans la zone de tension, qui est constitué d'une tige d'ancrage (1) pouvant être ancrée au moyen d'une masse composite dans une forure d'un élément de construction, laquelle tige comprend plusieurs sections de cône (3a, 3b, 3c) s'élargissant en direction de l'extrémité d'introduction (4) et écartées les unes des autres par des sections cylindriques (6a, 6b), la longueur des sections cylindriques (6a, 6b) mesurant 0,5 fois à 2,0 fois la longueur de la section de cône (3a, 3b) raccordée à la section respective en direction de l'extrémité d'introduction (4), **caractérisé en ce que** le diamètre des sections cylindriques (6a, 6b) disposées entre les sections de cône (3a, 3b, 3c) augmente en partant de l'extrémité d'introduction (4) et sa longueur diminue.

2. Elément d'ancrage composite selon la revendication 1, **caractérisé en ce que** le diamètre des sections cylindriques (6a, 6b) par rapport au diamètre extérieur de la tige d'ancrage (1) est réduit de 0,5 fois à 0,75 fois.

3. Elément d'ancrage composite selon la revendication 1, **caractérisé en ce que** la tige d'ancrage (1) est pourvue d'au moins deux, de préférence trois sections de cône (3a, 3b, 3c), dont l'angle de cône (α) mesure entre 12° et 20°.

4. Elément d'ancrage composite selon la revendication 1, **caractérisé en ce que** la surface frontale (7) formée sur le passage d'une section de cône (3a, 3b, 3c) à une section cylindrique (6a, 6b) est conçue comme une surface conique dotée d'un angle compris entre 45° et 85° par rapport à l'axe médian (8).

5. Elément d'ancrage composite selon la revendication 1, **caractérisé en ce que** la tige d'ancrage (1) comprend sur son extrémité d'introduction (4) une pointe de mélange, qui est formée par une surface oblique (9) inclinée par rapport à l'axe médian (8).

6. Elément d'ancrage composite selon la revendication 1, **caractérisé en ce qu'**une zone conique (10), qui s'élargit en direction de l'extrémité arrière de la tige d'ancrage (1) en formant en angle plat compris de préférence entre 1,5° et 4°, est raccordée à la section de cône (3c) éloignée le plus possible de l'extrémité d'introduction (4).

7. Elément d'ancrage composite selon la revendication 1, **caractérisé en ce que** la tige d'ancrage (1) est pourvue sur ses surfaces de revêtement présentant la dimension maximale d'un profilé polygonal (15).
